# EUROPÄISCHE PATENTSCHRIFT

(11) **EP 1 637 756 B1**
(45) Veröffentlichungstag und Bekanntmachung des Hinweises auf die Patenterteilung: **13.04.2011**
(21) Anmeldenummer: 04104495.9
(22) Anmeldetag: 16.09.2004
(51) Int. Cl.: F16D 13/72, F16H 61/00, F16H 61/688

(54) **Doppelkupplungsgetriebe mit einem hydraulisches System zur Bereitstellung von Drücken und Volumenströmen**
Double clutch transmission with an hydraulic system to provide pressures and flows
Boîte de vitesses à double embrayages avec une sytème hydraulique pour fournir des pressions et courants

(43) Veröffentlichungstag der Anmeldung: 22.03.2006
(73) Patentinhaber: Getrag Ford Transmissions GmbH, 50725 Köln (DE)
(72) Erfinder: Möhlmann, Reinhard, 50739 Köln (DE); Hegerath, Andreas, 50126 Bergheim (DE); Leibbrandt, Martin, 50181 Bedburg (DE); Eggert, Ulrich, 41751 Viersen (DE)

(56) Entgegenhaltungen:
- EP-A- 1 413 803
- EP-A- 1 420 185
- WO-A-03/040580
- DE-A1- 10 306 895
- US-A1- 2002 002 878
- US-A1- 2004 112 171

## Beschreibung

Die Erfindung betrifft ein hydraulisches System zur Bereitstellung von Drücken und Volumenströmen in einem Doppelkupplungsgetriebe, insbesondere zur Bereitstellung eines ersten Volumenstroms zur Kühlung und Schmierung einer ersten Kupplung und zur Bereitstellung eines zweiten Volumenstroms zur Kühlung und Schmierung einer zweiten Kupplung. Neben der Kühlung und Schmierung der Kupplungen übernimmt das hydraulische System bei aus dem Stand der Technik bekannten Doppelkupplungsgetrieben noch weitere Aufgaben. So lassen sich durch das hydraulische System die beiden Kupplungen automatisch betätigen und auch das Ein-/Auslegen von Gängen des Doppelkupplungsgetriebes erfolgt über mehrere Schaltaktuatoren automatisch.

In der EP 1413803, welche die Merkmale des Oberbegriffs des Anspruch 1 offenbart, ist ein Verfahren zum Kühlen der zwei Kupplungen eines Doppelkupplungsgetriebes in einem Kraftfahrzeug beschrieben. Zur Durchführung des Verfahrens wird dabei ein hydraulisches System benötigt, durch das für jede Kupplung ein ÖI-Volumenstrom bereitgestellt wird. Das Verfahren sieht dabei vor, für die jeweilige Kupplung einen Volumenstrom bereitzustellen, der von einer Ölsumpftemperatur, von der Temperatur des aus der jeweiligen Kupplung strömenden Öls und von der Leistung abhängt, die durch die Kupplungen übertragen wird. Entsprechend muss für jeden Volumenstrom ein Regelventil oder dergleichen vorgesehen sein, um in Abhängigkeit der oben genannten Faktoren die Volumenströme regeln zu können.

In der DE 103 06 895 wird ebenfalls ein Verfahren zum Kühlen einer Doppelkupplung eines Kraftfahrzeugs beschrieben, wobei hier die beiden Kupplungen mit einem einzigen Volumenstrom eines Kühlmittels gemeinsam beaufschlagt werden. Dies vereinfacht im Vergleich zu einer Kühlung mit zwei Volumenströmen den Aufbau des entsprechenden hydraulischen Systems. Jedoch ist es nicht möglich, eine Kupplung des Doppelkupplungsgetriebes individuell zu kühlen und zu schmieren. So wird in der DE 103 06 895 vorgeschlagen, den Gesamtvolumenstrom zur Kühlung und Schmierung insbesondere bei niedrigen Temperaturen zu unterbrechen, um das Schleppmoment, bedingt durch das in der Kupplung befindliche Kühlmittel, zu reduzieren und somit das Einlegen eines Ganges zu vereinfachen. Dabei würde es ausreichen, nur den Volumenstrom für die Kupplung zu unterbrechen, die dem Teilgetriebe des Doppelkupplungsgetriebes zugeordnet ist, in dem ein Gang eingelegt werden soll.

Die Bereitstellung von Volumenströmen für jeweils eine Kupplung ermöglicht somit eine gezielte Kühlung und Schmierung der beiden Kupplungen mit mehr Freiheitsgraden. Dies führt jedoch in der Regel zu einer höheren Anzahl von hydraulischen Bauteilen und insbesondere zu einer höheren Anzahl von teuren Regelventilen. Zudem ist bei der Auslegung des hydraulischen Systems zu beachten, dass bei Ausfall eines oder mehrerer seiner Bauteile zumindest ein Notbetrieb des Doppelkupplungsgetriebes möglich sein sollte.

Der Erfindung liegt daher die Aufgabe zugrunde, ein hydraulisches System zur Bereitstellung von Volumenströmen und Drücken in einem Doppelkupplungsgetriebe, insbesondere zur Schmierung und Kühlung der beiden Kupplungen des Doppelkupplungsgetriebes bereitzustellen, das einfach aufgebaut ist, kostengünstig herstellbar ist und auch bei Ausfall eines seiner Bauteile die für den Betrieb des Doppelkupplungsgetriebes notwendigen Drücke und Volumenströme weiterhin bereitstellt.

Die der Erfindung zugrunde liegende Aufgabe wird dadurch gelöst, dass der ersten und zweiten Kupplung wenigstens ein Umschaltventil vorgeschaltet ist, das in einer ersten Stellung einen Schmierstrom auf die erste Kupplung und einen Kühlstrom auf die zweite Kupplung lenkt und in einer zweiten Stellung den Schmierstrom auf die zweite Kupplung und den Kühlstrom auf die erste Kupplung lenkt. Dabei trägt der Schmierstrom in der ersten Stellung zum ersten Volumenstrom bei, der für die Kühlung und Schmierung der ersten Kupplung eingesetzt wird, während in der zweiten Stellung des Umschaltventils der Kühlstrom zur Kühlung und Schmierung der ersten Kupplung verwendet wird. Dies gilt analog auch für die zweite Kupplung: Der zweite Volumenstrom zur Kühlung und Schmierung der zweiten Kupplungen wird entweder von dem Kühlstrom oder von dem Schmierstrom gespeist. Dies bedeutet, dass beispielsweise bei Ausfall des Kühlstroms oder des Schmierstroms beide Kupplungen grundsätzlich weiterhin gekühlt und geschmiert werden können, indem das Umschaltventil in die jeweils benötigte Stellung geschaltet wird. Als Kühl- und Schmiermittel wird vorzugsweise Öl verwendet.

Lässt sich hingegen das Umschaltventil nicht mehr schalten, wird eine Kupplung nur noch mit dem Schmierstrom und die andere Kupplung nur noch mit dem Kühlstrom geschmiert und gekühlt. Wenn Kühl- und Schmierstrom so ausgelegt sind, dass sie für sich allein genommen eine ausreichende Kühlung und Schmierung einer Kupplung gewährleisten, ist ein Betrieb des Doppelkupplungsgetriebes auch bei nicht mehr schaltbarem Umschaltventil weiterhin möglich. Erst wenn das Umschaltventil und der Kühlstrom oder der Schmierstrom gleichzeitig ausfallen, kann eine der beiden Kupplungen nicht mehr gekühlt und geschmiert werden.

Vorzugsweise entspricht die Summe aus dem ersten und zweiten Volumenstrom zur Kühlung und Schmierung der ersten und zweiten Kupplung der Summe aus dem Kühlstrom und dem Schmierstrom. Damit werden die Volumenströme zum Kühlen und Schmieren der beiden Kupplungen ausschließlich aus dem Schmierstrom oder dem Kühlstrom gespeist. Dies bedeutet, dass beispielsweise in der ersten Stellung des Umschaltventils die zweite Kupplung nur durch den Kühlstrom gekühlt und geschmiert wird. Das gesamte Kühl- und Schmiermittel zum Kühlen und Schmieren der Kupplungen wird somit über das Umschaltventil geführt.

In einem bevorzugten Ausführungsbeispiel ist dem Umschaltventil ein Steuerventil vorgeschaltet, das den Kühlstrom regelt. Durch das Steuerventil ist der Kühlstrom in Grenzen variierbar. Vorzugsweise kann der Volumenstrom in einem Bereich von 0 I pro Minute bis zum einem Maximalwert, beispielsweise 20 I pro Minute, variiert werden.

Vorzugsweise ist bei Nichtanliegen eines Signals, durch das das Steuerventil angesteuert wird, der Kühlstrom von Null verschieden. Dies stellt sicher, dass das Steuerventil auch einen Kühlstrom zulässt, wenn beispielsweise die das Signal führende Leitung zum Steuerventil unterbrochen ist oder wenn das das Signal erzeugende Signalelement ausgefallen ist. Folglich steht somit ein erster und zweiter Volumenstrom zur Kühlung und Schmierung der Kupplungen auch bei Ausfall des Signals für das Steuerventil weiterhin zur Verfügung, da der Kühlstrom jeweils auf beide Kupplungen gelenkt werden kann.

Das Steuerventil ist vorzugsweise als 2/3-Wegeventil mit einem Eingang und mit einem Ausgang ausgebildet. In einer ersten Stellung des Steuerventils wird zwischen Eingang und Ausgang eine Blende geschaltet, die einen bestimmten Volumenstrom zwischen Eingang und Ausgang des Steuerventils zulässt. In einer zweiten Stellung des Steuerventils werden Eingang und Ausgang getrennt. Dadurch wird der Kühlstrom auf Null gesetzt. In einer dritten Stellung werden Eingang und Ausgang verbunden, so dass das Kühlmittel oder Öl ungehindert durch das Steuerventil fließen kann und sich ein maximaler Kühlstrom einstellt. Das 2/3-Wegeventil ist dabei so ausgelegt, dass bei einem Signalwert gleich Null die erste Stellung eingenommen wird. Dies kann beispielsweise durch eine Feder realisiert werden, die das Wegeventil bei nicht anliegendem Signal in diese erste Stellung drückt. Alternativ können die Funktionen des Steuerventils auch durch ein 3/3 Wegeventil mit zwei gebrückten Eingängen realisiert werden.

In einem bevorzugten Ausführungsbeispiel ist das 2/3-Wegeventil zwischen dessen Stellungen mehrmals pro Sekunde umschaltbar. Wenn beispielsweise zwischen der zweiten und dritten Stellung hin- und hergeschaltet wird, ergibt sich ein über die Zeit gemittelter Kühlstrom, der zwischen Null und dem maximalen Kühlstrom liegt. Durch das Verhältnis der Schaltzeiten, also der Zeiten, in denen sich das Steuerventil jeweils in der zweiten oder dritten Stellung befindet, kann ein beliebiger (Mittel-)Wert für den Kühlstrom eingestellt werden. Ist beispielsweise das Verhältnis der Schaltzeit der zweiten Stellung zu der Schaltzeit der dritten Stellen 1:1 und wird ein maximaler Kühlstrom von 20 l/min angenommen, ergibt sich ein mittlerer Kühlstrom von 10 l/min.

Vorzugsweise kann dem Umschaltventil eine Blende vorgeschaltet werden, durch die der Schmierstrom auf einen konstanten Wert einstellbar ist. Somit liegt, da die Ausfallwahrscheinlichkeit einer Blende sehr gering ist, immer dann ein Schmierstrom vor, wenn ein Druck vor der Blende gegeben ist, der vorzugsweise durch einen Hauptdruckregler des Doppelkupplungsgetriebes geregelt wird.

In einem bevorzugten Ausführungsbeispiel ist das Umschaltventil mehrmals pro Sekunde, vorzugsweise bis zu 20 mal pro Sekunde, zwischen der ersten und zweiten Stellung umschaltbar. Dadurch, dass das Umschaltventil zwischen erster und zweiter Stellung mit einer bestimmten Frequenz hin- und herschaltet, kann der variable Kühlstrom und der Schmierstrom auf die erste und zweite Kupplung beliebig aufgeteilt werden. Durch das Zusammenwirken des schnell schaltbaren Umschaltventils und des Steuerventils für den Kühlstrom lassen sich die Volumenströme für die beiden Kupplungen in weiten Grenzen variieren. Wenn beispielsweise das Umschaltventil zwischen erster und zweiter Stellung hin- und herschaltet und die Schaltzeit, in der das Umschaltventil in der ersten Stellung verharrt, der Schaltzeit entspricht, in der das Umschaltventil in der zweiten Stellung verharrt, ergeben sich gleichgroße Volumenströme für die erste und zweite Kupplung. Wird das Verhältnis der Schaltzeiten anders eingestellt, lässt sich das Verhältnis des ersten und zweiten Volumenstroms entsprechend variieren und regeln. Wenn beispielsweise beim Hin- und Herschalten die Schaltzeit der ersten Stellung doppelt so groß ist wie die Schaltzeit der zweiten Stellung, wird der ersten Kupplung ein Volumenstrom zugeführt, der sich aus zwei Teilen Schmierstrom und einem Teil Kühlstrom zusammensetzt.

In einem bevorzugten Ausführungsbeispiel ist das Umschaltventil durch ein Signal wenigstens eines Signalelements ansteuerbar, das für die Auswahl eines Schaltaktuator, für die Auswahl einer Gruppe von Schaltaktuatoren aus einer Mehrzahl von Schaltaktuatoren im Doppelkupplungsgetriebe oder für die Auswahl einer Kammer eines Schaltaktuators verwendet wird. Beispielsweise lässt sich zum Schalten des Umschaltventils ein Signalelement verwenden, das, wenn es ein Signal erzeugt, die Schaltaktuatoren zum Ein-/Auslegen der Gänge eines ersten Teilgetriebes auswählt. Durch das entsprechende Signal wird ebenfalls das Umschaltventil angesteuert und in die zweite Stellung geschaltet, so dass die erste Kupplung, die dem ersten Teilgetriebe zugeordnet ist, mit dem variablen Kühlstrom beaufschlagt wird. Um ein leichtes Einlegen der Gänge in dem ersten Teilgetriebe zu gewährleisten, wird der Kühlstrom auf Null gesetzt, so dass in der ersten Kupplung das Schleppmoment, hervorgerufen durch das in der ersten Kupplung befindlichem Öl, reduziert oder auf Null gesetzt wird. Somit kann auf ein gesondertes Signalelement für das Umschaltventil verzichtet werden, in dem die besonderen Zusammenhänge in der Schaltlogik des hydraulischen Systems in dem Doppelkupplungsgetriebe ausgenutzt werden.

Grundsätzlich ließe sich zum Schalten des Umschaltventils auch ein beliebiges Signalelement verwenden, dem in dem hydraulischen System bereits eine andere Verwendung zukommt. Es ist in diesem Fall nur sicherzustellen, dass dieses betreffende Signalelement zum Schalten des Umschaltventils nur in den Zeiten zum Einsatz kommt, in denen es für die andere Verwendung nicht gebraucht wird.

Es ist auch möglich, dass das Umschaltventil durch ein Signal wenigstens eines Signalelements ansteuerbar ist, durch das die erste oder die zweite Kupplung drucklos geschaltet werden kann. Führt beispielsweise das Signal eines Signalelements dazu, dass die erste Kupplung drucklos geschaltet wird, kann dieses Signal dazu verwendet werden, das Umschaltventil in dessen zweite Stellung zu schalten Dies führt dazu, dass die drucklos geschaltete Kupplung mit dem variablen Kühlstrom beaufschlagt wird, der auf den Wert Null gesetzt werden kann. Wie oben bereits beschrieben könnten dann die Gänge des ersten Teilgetriebes leicht eingelegt werden, da das Schleppmoment in der ersten Kupplung reduziert ist.

In einem bevorzugten Ausführungsbeispiel kann das Umschaltventil durch Signale wenigstens eines Signalelements zur Schaltaktuatoren-Auswahl und wenigstens eines Signalelementes zur Drucklos-Schaltung einer der Schaltkupplungen angesteuert werden, wobei das Signal des Signalelements zur Drucklos-Schaltung der Kupplung stärker ist als das Signal des Signalelements zur Schaltaktuatoren-Auswahl. Sind beispielsweise beiden Kupplungen nicht drucklos geschaltet, liegt an dem Umschaltventil kein Signal zur Drucklos-Schaltung der Kupplung(en) an. In diesem Fall kann durch das Signalelement zur Schaltaktuatoren-Auswahl das Umschaltventil beliebig unter der Voraussetzung hin- und hergeschaltet werden, dass in diesem Schaltzustand der beiden Kupplungen eine Schaltaktuatoren-Auswahl nicht vorgesehen ist. Der Begriff "Schaltaktuator-Auswahl" in diesem Zusammenhang soll auch die Auswahl einer Kammer eines Schaltaktuators beinhalten. Dieser kann als doppeltwirkender Schaltzylinder mit zwei Kammern ausgebildet sein.

Liegt jedoch ein Signal eines Signalelements zur Drucklos-Schaltung einer Kupplung an, hat das Signal des Signalelements zur Schaltaktuatoren-Auswahl keinen Einfluss auf die Stellung des Umschaltventils.

Das Umschaltventil ist vorzugsweise durch wenigstens ein Hydraulikelement ansteuerbar, durch das die Kraftregelung für die Schaltaktuatoren durchführbar ist. Dadurch kann auf ein gesondertes Bauteil zur Erzeugung eines Signals zur Ansteuerung des Umschaltventils verzichtet werden.

Anhand der in den Figuren dargestellten Ausführungsbeispielen wird die Erfindung näher erläutert. Es zeigen:
- Figur 1: einen Ausschnitt eines Blockschaltbilds eines ersten Ausführungsbeispiels der Erfindung;
- Figur 2: ein Blockschaltbild eines anderen Ausführungsbeispiels der Erfindung; und
- Figur 3: ein modifiziertes Ausführungsbeispiel

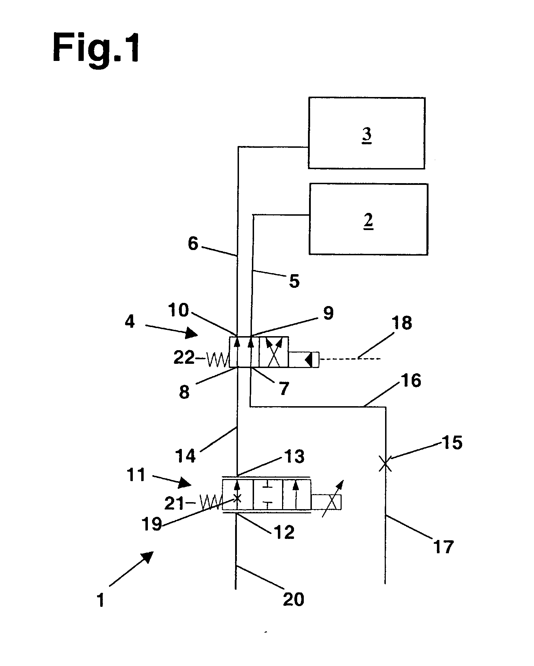

Figur 1 zeigt einen Ausschnitt eines Blockschaltbilds eines erfindungsgemäßen hydraulischen Systems, das in seiner Allgemeinheit mit 1 bezeichnet wird. Das hydraulische System 1 dient unter anderem der Kühlung und Schmierung einer ersten Kupplung 2 und einer zweiten Kupplungen 3 eines nicht weiter dargestellten Doppelkupplungsgetriebes.

Der ersten Kupplung 2 und der zweiten Kupplung 3 ist ein Umschaltventil 4 vorgeschaltet. Das Umschaltventil 4 ist über eine Leitung 5 mit der ersten Kupplung 2 und über eine Leitung 6 mit der zweiten Kupplung 3 verbunden. Das Umschaltventil 4 ist als 4/2-Wegeventil mit einem ersten und zweiten Eingang 7, 8 und mit einem ersten und zweiten Ausgang 9, 10 ausgebildet. Die Leitung 5 verbindet den ersten Ausgang 9 des Umschaltventils 4 mit der ersten Kupplung 2, während die Leitung 6 den zweiten Ausgang 10 mit der zweiten Kupplung 3 verbindet.

Dem zweiten Eingang 8 des Umschaltventils 4 ist ein Steuerventil 11 vorgeschaltet, das als 2/3-Wegeventil mit einem Eingang 12 und einem Ausgang 13 ausgebildet ist. Eine Leitung 14 verbindet den Ausgang 13 des Steuerventils 11 mit dem zweiten Eingang 8 des Umschaltventils 4. Eine Blende 15, die dem ersten Eingang 7 des Umschaltventils 4 vorgeschaltet ist, sorgt für einen konstanten Volumenstrom in einer Leitung 16, soweit vor der Blende 15 in der Zuleitung 17 ein konstanter Druck herrscht. Die Leitung 16 verbindet die Blende 15 mit dem ersten Eingang 7 des Umschaltventils 4. Der Volumenstrom in der Leitung 16 wird im folgenden als Schmierstrom bezeichnet.

Figur 1 zeigt das Umschaltventil 4 in einer federbeaufschlagten Ruhestellung, die einer ersten Stellung des Umschaltventils 4 entsprechen soll. Wie der Darstellung zu entnehmen ist, verbindet das Umschaltventil 4 in der ersten Stellung den Ausgang 13 des Steuerventils 11 mit der zweiten Kupplung 3 und die Zuleitung 17 beziehungsweise die Leitung 16 mit der ersten Kupplung 2.

Durch Anlegen eines Signals über eine Signalleitung 18 lässt sich das Umschaltventil in eine zweite Stellung schalten, bei der das Steuerventil 11 mit der ersten Kupplung 2 und die Leitung 16 mit der zweiten Kupplung 3 verbunden ist.

Das Steuerventil 11 kann drei Stellungen einnehmen: In einer ersten Stellung (in Figur 1 dargestellt) ist zwischen Eingang 12 und Ausgang 13 eine Blende 19 geschaltet, die für einen bestimmten Volumenstrom in der Leitung 14 sorgt, wenn vor dem Steuerventil 11 in einer Zuleitung 20 ein konstanter Druck herrscht. In einer zweiten Stellung werden Eingang 12 und Ausgang 13 voneinander mit der Folge getrennt, dass in Leitung 14 kein Kühl- oder Schmiermittel vorzugsweise in Form eines Öls fließt. In der dritten Stellung des Steuerventils 11 werden Eingang 12 und Ausgang 13 ohne Blende oder dergleichen verbunden, was bei einem gegebenen Druck in der Zuleitung 20 zu einem maximalen Volumenstrom in der Leitung 14 führt.

Je nach Stellung des Steuerventils 11 stellt sich in der Leitung 14 ein unterschiedlicher Volumenstrom ein, der hier als Kühlstrom bezeichnet werden soll. Durch Hin-und Herschalten zwischen beispielsweise der zweiten und dritten Stellung des Steuerventils 11 lässt sich ein zeitlich gemittelter Kühlstrom einstellen, der zwischen 0 I/min und dem oben bereits erwähnten maximalen Volumenstrom in der Leitung 14 liegt. Wird das Steuerventil mit einer genügend hohen Frequenz betätigt, stellt sich somit ein gleichmäßiger, zwischen Null und einem Maximalwert liegender Kühlstrom in der Leitung 14 ein.

Das Steuerventil 11 wird durch Anlegen eines Stromes I geschaltet. Bei einem Strom I gleich Null drückt eine Feder 21 das Steuerventil 11 in die erste Stellung. Dies bedeutet, dass bei einem Fehler in der Ansteuerung des Steuerventils 11, der zu einem Ausfall des Stromes I führt, ein bestimmter, von der Blende 19 abhängiger Volumenstrom oder Kühlstrom gewährleistet ist. Bei einem maximalen Strom I_{Max}, wie er bei einem Kurzschluss gegeben sein könnte, wird das Steuerventil 11 in die dritte Stellung geschaltet, in der sich ein maximaler Kühlstrom einstellt.

Je nach Stellung des Umschaltventils 4 lässt sich der variable Kühlstrom auf die erste Kupplung 2 oder die zweite Kupplung 3 leiten, während der konstante Schmierstrom in der Leitung 16 entsprechend auf die jeweils andere Kupplung geleitet wird. Da die beiden Kupplungen 2, 3 ausschließlich mittels der Ströme durch die Leitung 14 (Kühlstrom) und durch die Leitung 16 (Schmierstrom) gekühlt und geschmiert werden, entspricht beispielsweise in der ersten Stellung des Umschaltventils 4 der Schmierstrom einem ersten Volumenstrom in der Leitung 5, der die erste Kupplung 3 kühlt und schmiert. Entsprechend stellt der Kühlstrom in der Leitung 14 einen zweiten Volumenstrom in der Leitung 6 dar, der die zweite Kupplung 3 kühlt und schmiert.

Die in der Figur 1 dargestellte Bereitstellung von Volumenströmen zum Kühlen und Schmieren der Kupplungen 2 und 3 ist (eingeschränkt) funktionsfähig auch beim Ausfall einzelner Bauteile oder Signale. Fällt das durch die Signalleitung 18 zugeführte Signal aus, lässt sich das Umschaltventil 4 nicht mehr schalten. Eine Feder 22 sorgt dafür, dass in diesem Fall die in der Figur 1 dargestellte erste Stellung eingenommen wird. Sind der Kühlstrom durch die Leitung 14 und der Schmierstrom durch die Leitung 16 ausreichend groß, werden beide Kupplungen 2, 3 weiterhin gekühlt und geschmiert, so dass zumindest ein Notbetrieb möglich ist. Fällt der Strom I für das Steuerventil 11 aus, schaltet das Steuerventil 11 aufgrund der Feder 21 in seine erste Stellung, wodurch ein bestimmter Kühlstrom durch die Blende 19 zum Umschaltventil 4 gelangt.

Durch schnelles Hin- und Herschalten des Umschaltventils 4 lässt sich der variable Kühlstrom aus dem Steuerventil 11 und der durch die Blende 15 vorgegebene Schmierstrom auf die beiden Kupplungen 2, 3 zu gleichen Teilen aufteilen. Auch ist es möglich, durch unterschiedlich große Schaltzeiten eine entsprechende Gewichtung vorzunehmen: Beispielsweise könnte beim Hin- und Herschalten das Umschaltventil zwei Zeiteinheiten in der ersten Stellung und eine Zeiteinheit in der zweiten Stellung verweilen. Der erste Volumenstrom zur Kühlung und Schmierung der ersten Kupplung 2 würde sich dann im Mittel aus zwei Teilen Schmierstrom und einem Teil Kühlstrom zusammensetzen.

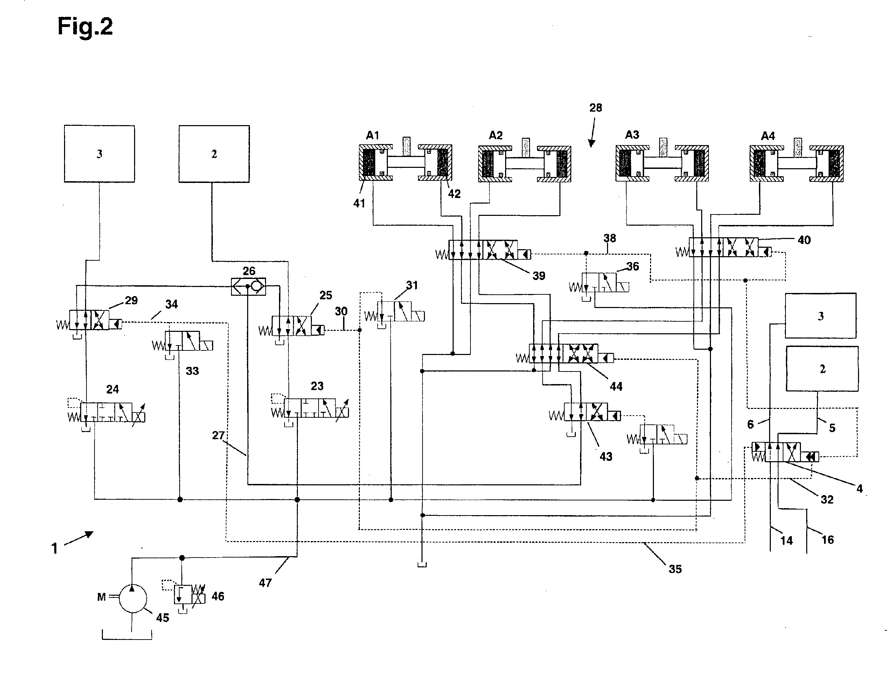

Figur 2 zeigt den Ausschnitt der Figur 1 in modifizierter Form mit weiteren Teilen des hydraulischen Systems 1. Der Ausschnitt der Figur 1 ist auf der rechten Seite der Figur 2 angeordnet, wobei das Steuerventil 11, die Blende 15 und die dazugehörigen Zuleitungen 17, 20 nicht dargestellt sind.

Das hydraulische System 1 umfasst neben dem in Figur 1 gezeigten Teilsystem zum Kühlen und Schmieren der ersten und zweiten Kupplung 2, 3 einen ersten Druckregler 23 und einen zweiten Druckregler 24. Die Druckregler 23, 24 stellen modellierte Drücke bereit, durch die entweder die erste und zweite Kupplung 2, 3 oder einer der vier Schaltaktuatoren A1 bis A4 betätigt werden können. Zwischen dem ersten Druckregler 23 und der ersten Kupplung 2 ist ein Umschaltventil 25 angeordnet. Durch dieses Umschaltventil 25 lässt sich der modellierte Druck des Druckreglers 23 entweder auf die erste Kupplung 2 oder einen Umschalter 26 legen, der über eine Leitung 27 mit einem Schaltsystem 28 verbunden ist, zu dem die bereits erwähnten Schaltaktuatoren A1 bis A4 gehören.

In ähnlicher Weise ist zwischen der zweiten Kupplung 3 und dem zweiten Druckregler 24 ein Umschaltventil 29 geschaltet, was entweder den von Druckregler 24 geregelten Druck auf die zweite Kupplung 3 oder den Umschalter 26 legt. In Abhängigkeit der eingangsseitig anliegenden Drücken stellt der Umschalter 26 entweder eine Verbindung zwischen dem Umschaltventil 25 und dem Schaltsystem 28 oder eine Verbindung zwischen dem Umschaltventil 29 und dem Schaltsystem 28 her.

Das Umschaltventil 25 wird durch einen Steuerdruck geschaltet, der durch eine Steuerleitung 30 zugeführt wird. Die Steuerleitung 30 verbindet das Umschaltventil 25 mit einem Signalelement 31, das elektro-magnetisch angesteuert wird. Zu erkennen ist, das über eine Leitung 32 der Steuerdruck des Signalelements 31 auch auf das Umschaltventil 4 geschaltet wird.

Auch dem Umschaltventil 29 ist ein einen Steuerdruck erzeugendes Signalelement 33 zugeordnet, das über eine Signalleitung 34 mit dem Umschaltventil 29 verbunden ist. Über eine Signalleitung 35 wird der Steuerdruck des Signalelements 33 zum Umschaltventil 4 geführt. Wie der Figur 2 zu entnehmen ist, sorgt der Steuerdruck des Signalements 33 dafür, dass das Umschaltventil 4 in dessen erste Stellung gedrückt wird, während der Steuerdruck des Signalelements 31 das Umschaltventil 4 gegen die Kraft der Feder 22 in dessen zweite Stellung drückt.

Des weiteren wird das Umschaltventil 4 durch einen Steuerdruck angesteuert, der von einem weiteren Signalelement, nämlich einem Signalelement 36, erzeugt wird. Das Signalelement 36 ist über eine Leitung 37 mit dem Umschaltventil 4 verbunden. Das Signalelement 35 schaltet über eine Leitung 38 zwei Kammerauswahlventile 39, 40, die zwischen den Schaltaktuatoren A1 bis A4 und der Leitung 27 angeordnet sind. Um eine der beiden Kammern 41, 42 eines bestimmten Schaltaktuators A1 bis A4 gezielt mit dem in der Leitung 27 herrschenden Druck bei gleichzeitiger Drucklos-Schaltung aller übrigen Kammern beaufschlagen zu können, sind des weiteren ein Aktuatorenauswahlventil 43 und eine Gruppenauswahlventil 44 vorgesehen. Dabei wird durch das Gruppenauswahlventil 44 der Druck in der Leitung 27 entweder auf die die Aktuatoren A1 und A2 oder auf die Aktuatoren A3 und A4 gelenkt. Durch das Aktuatorenauswahlventil wird je nach Stellung des Gruppenauswahlventils 44 entweder Schaltaktuator A1 oder A2 (beziehungsweise A3 oder A4) ausgewählt. Das Gruppenauswahlventil 44 wird durch das gleiche Steuersignal, nämlich durch den Steuerdruck des Signalelements 31, angesteuert, wodurch ein Signalelement eingespart werden kann.

Eine motorbetriebene Pumpe 45 mit einem Hauptdruckregler 46 stellt einen Betriebsdruck bereit, der über eine Verteilungssystem 47 beispielsweise eingangsseitig an den Druckreglern 23, 24 oder auch an dem Eingang 12 des Steuerventils 11 (siehe Figur 1) anliegt.

Wenn sich sowohl Umschaltventil 25 als auch Umschaltventil 29 in den in Figur 2 dargestellten Stellungen befinden, werden die Drücke der Druckregler 23, 24 auf die Kupplungen 2, 3 geleitet. Die Kupplungen 2, 3 können jeweils in Abhängigkeit der modellierten Drücke ein Drehmoment übertragen, wodurch eine gewisse Drehmomentüberschneidung möglich ist, die zum Überblenden des Drehmomentes von einem auf das andere Teilgetriebe des Doppelkupplungsgetriebes notwendig ist. In dieser Phase ist die Leitung 27 über die Umschaltventile 25, 29 drucklos geschaltet. Auch liegen in dieser Phase keine Steuerdrücke der Signalelemente 31, 33 an, so dass das Umschaltventil 4 allein durch das Signalelement 36 betätigt werden kann. Durch das Signalelement 36 lässt sich der variable Kühlstrom in der Leitung 14 oder der konstante Schmierstrom in der Leitung 16 je nach Anforderung beliebig auf die Kupplungen 2, 3 aufteilen, beispielsweise durch ein wie oben beschriebenes schnelles Hin- und Herschalten.

Wenn ein Gang eingelegt werden soll, beispielsweise ein Gang, der durch einer der Schaltaktuatoren A1, A2 eingelegt werden kann, die zu einem der ersten Kupplung zugeordneten ersten Teilgetriebe gehören, wird durch einen Steuerdruck des Signalelements 31 das Umschaltventil 25 in dessen zweite Stellung gebracht. Die erste Kupplung 2 wird dadurch drucklos geschaltet und öffnet sich. Der Steuerdruck des Signalelements 31 liegt aufgrund der Verbindung über die Leitung 32 auch an dem Umschaltventil 4 an und drückt dieses in dessen zweite Stellung. Dadurch wird der Kühlstrom in der Leitung 14 auf die erste Kupplung 2 gelenkt. Der Kühlstrom lässt sich nun bis auf 0 l/min absenken, sodass ein durch das Kühlmittel hervorgerufenes Schleppmoment in der ersten Kupplung 2 deutlich reduziert wird. Ein Einlegen eines Ganges wird dadurch vereinfacht.

In analoger Weise vereinfacht das erfindungsgemäße System 1 das Schalten eines Ganges durch die Schaltaktuatoren A3 und A4, die zu einem zweiten Teilgetriebe des Doppelkupplungsgetriebes gehören. Hierzu wird die zweite Kupplung 3 drucklos geschaltet, wobei an dem Umschaltventil 29 und an dem Umschaltventil 4 der Steuerdruck des Signalelementes 33 anliegt. Der Steuerdruck drückt das Umschaltventil 4 in dessen erste Stellung und zwar unabhängig von dem Signalelement 36, da der Steuerdruck des Signalelements 33 größer ist als der Steuerdruck des Signalelements 36. Der variable und auf null absenkbare Kühlstrom wird nun auf die zweite Kupplung 3 geleitet, wodurch ein Schaltaktuator A3, A4 ohne Schleppmoment in der zweiten Kupplung 3 einen Gang einlegen kann.

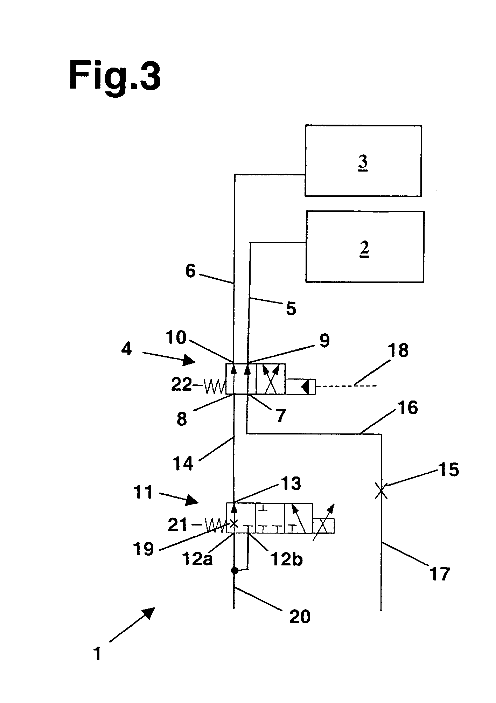

Figur 3 zeigt ein modifiziertes Ausführungsbeispiel der Erfindung, das sich von dem Ausführungsbeispiel der Figur 1 darin unterscheidet, dass das Steuerventil 11 als 3/3-Wegeventil ausgebildet ist. Das 3/3-Wegeventil 11 weist dabei zwei Eingänge 12a, 12b auf. In der ersten Stellung (in Figur 3 dargestellt) des 3/3-Wegeventils ist zwischen dem Eingang 12a und dem Ausgang 13 eine Blende geschaltet, während Eingang 12b vom Ausgang 13 getrennt ist. In der zweiten Stellung sind beide Eingänge 12a, 12b vom Ausgang 13 getrennt. In der dritten Stellung lässt das 3/3-Wegeventil einen ungehinderten Fluss zwischen dem Eingang 12b und dem Ausgang 13 zu, während Eingang 12a und Ausgang 13 voneinander getrennt sind.

### Bezugszeichenliste

- 1: Hydraulisches System
- 2: Erste Kupplung
- 3: Zweite Kupplung
- 4: Umschaltventil
- 5: Leitung
- 6: Leitung
- 7: Erster Eingang
- 8: Zweiter Eingang
- 9: Erster Ausgang
- 10: Zweiter Ausgang
- 11: Steuerventil
- 12: Eingang
- 13: Ausgang
- 14: Leitung
- 15: Blende
- 16: Leitung
- 17: Zuleitung
- 18: Signalleitung
- 19: Blende
- 20: Zuleitung
- 21: Feder
- 22: Feder
- 23: Erster Druckregler
- 24: Zweiter Druckregler
- 25: Umschaltventil
- 26: Umschalter
- 27: Leitung
- 28: Schaltsystem
- 29: Umschaltventil
- 30: Steuerleitung
- 31: Signalelement
- 32: Leitung
- 33: Signalelement
- 34: Signalleitung
- 35: Signalleitung
- 36: Signalelement
- 37: Signalleitung
- 38: Signalleitung
- 39: Kammerauswahlventil
- 40: Kammerauswahlventil
- 41: Kammer
- 42: Kammer
- 43: Aktuatorauswahlventil
- 44: Gruppenauswahlventil
- 45: Pumpe
- 46: Hauptdruckregler
- 47: Verteilungssystem
- 12a: Eingang
- 12b: Eingang
- A1 bis A4: Schaltaktuatoren

## Patentansprüche

1. Doppelkupplungsgetriebe mit einem hydraulisches System (1) zur Bereitstellung von Drücken und Volumenströmen, insbesondere zur Bereitstellung eines ersten Volumenstroms zur Kühlung und Schmierung einer ersten Kupplung (2) und zur Bereitstellung eines zweiten Volumenstroms zur Kühlung und Schmierung einer zweiten Kupplung (3) , **dadurch gekennzeichnet, dass** der ersten Kupplung (2) und der zweiten Kupplung (3) wenigstens ein Umschaltventil (4) vorgeschaltet ist, das in einer ersten Stellung einen Schmierstrom auf die erste Kupplung (2) und einen Kühlstrom auf die zweite Kupplung (3) lenkt und in einer zweiten Stellung den Schmierstrom auf die zweite Kupplung (3) und den Kühlstrom auf die erste Kupplung (2) lenkt.

2. Doppelkupplungsgetriebe nach Anspruch 1, **dadurch gekennzeichnet, dass** die Summe aus dem ersten und zweiten Volumenstrom zum Kühlen und Schmieren der ersten und zweiten Kupplung (2, 3) der Summe aus dem Schmierstrom und dem Kühlstrom entspricht.

3. Doppelkupplungsgetriebe nach Anspruch 1 oder 2, **dadurch gekennzeichnet, dass** dem Umschaltventil (4) ein Steuerventil (11) vorgeschaltet ist, das den Kühlstrom regelt.

4. Doppelkupplungsgetriebe nach einem der Ansprüche 1 bis 3, **dadurch gekennzeichnet, dass** der Kühlstrom in einem Bereich von 0 Liter/min bis zu einem Maximalwert variierbar ist.

5. Doppelkupplungsgetriebe nach Anspruch 3 oder 4, **dadurch gekennzeichnet, dass** bei Nichtanliegen eines Signals, durch das das Steuerventil (11) angesteuert wird, der Kühlstrom von Null verschieden ist.

6. Doppelkupplungsgetriebe nach Anspruch 5, **dadurch gekennzeichnet, dass** das Steuerventil (11) als 2/3-Wegeventil mit einem Eingang (12) und einem Ausgang (13) ausgebildet ist oder als 3/3- Wegeventil mit einem Eingang (12a), einem Eingang (12b) und einem Ausgang (13) ausgebildet ist, das in einer ersten Stellung zwischen Eingang (12, 12a) und Ausgang (13) eine Blende (19) schaltet, in einer zweiten Stellung Eingang (12, 12a, 12b) und Ausgang (13) trennt und in einer dritten Stellung Eingang (12, 12b) und Ausgang (13) verbindet, wobei das Steuerventil (11) bei einem Wert des Signals gleich Null die erste Stellung einnimmt.

7. Doppelkupplungsgetriebe nach einem der Ansprüche 3 bis 6, **dadurch gekennzeichnet, dass** das Steuerventil (11) mehrmals pro Sekunde, vorzugsweise bis zu 20 mal pro Sekunde zwischen den verschiedenen Stellungen umschaltbar ist.

8. Doppelkupplungsgetriebe nach einem der Ansprüche 1 bis 7, **dadurch gekennzeichnet, dass** dem Unschaltventil (4) eine Blende (15) vorgeschaltet ist, durch die der Schmierstrom auf einen konstanten Wert einstellbar ist.

9. Doppelkupplungsgetriebe nach einem der Ansprüche 1 bis 8, **dadurch gekennzeichnet, dass** das Umschaltventil (4) mehrmals pro Sekunde, vorzugsweise bis zu 20 mal pro Sekunde zwischen erster und zweiter Stellung umschaltbar ist.

10. Doppelkupplungsgetriebe nach einem der Ansprüche 1 bis 9, **dadurch gekennzeichnet, dass** das Umschaltventil (4) durch ein Signal wenigstens eines Signalelements (31, 36) ansteuerbar ist, das für die Auswahl eines Schaltaktuators (A1, A2, A3, A4) , für die Auswahl einer Gruppe von Schaltaktuatoren (A1, A2, A3, A4) aus einer Mehrzahl von Schaltaktuatoren (A1, A2, A3, A4) im Doppelkupplungsgetriebe oder für die Auswahl einer Kammer eines Schaltaktuators (A1, A2, A3, A4)verwendet wird.

11. Doppelkupplungsgetriebe nach einem der Ansprüche 1 bis 10, **dadurch gekennzeichnet, dass** das Umschaltventil (4) durch ein Signal wenigstens eines Signalelements (31, 33) ansteuerbar ist, durch das die erste oder die zweite Kupplung (2, 3) drucklos geschaltet werden kann.

12. Doppelkupplungsgetriebe nach Anspruch 10 oder 11, **dadurch gekennzeichnet, dass** das Umschaltventil (4) durch Signale des Signalelements zur Schaltaktuator-Auswahl und des Signalelements zur Drucklos-Schaltung der Kupplungen (2, 3) ansteuerbar ist, wobei das Signal zur Drucklos-Schaltung der Kupplungen stärker ist als das Signal des Signalelements zur Schaltaktuator-Auswahl.

13. Doppelkupplungsgetriebe nach einem der Ansprüche 1 bis 12, **dadurch gekennzeichnet, dass** das Umschaltventil (4) durch wenigstens ein Hydraulikelement ansteuerbar ist, durch das die Kraftregelung für die Schaltaktuatoren durchführbar ist.

## Claims

1. Dual clutch transmission having a hydraulic system (1) for providing pressures and volumetric flows, in particular for providing a first volumetric flow for cooling and lubricating a first clutch (2) and for providing a second volumetric flow for cooling and lubricating a second clutch (3), **characterized in that** at least one switching valve (4), which in a first position guides a lubricating flow onto the first clutch (2) and a cooling flow onto the second clutch (3) and in a second position guides the lubricating flow onto the second clutch (3) and the cooling flow onto the first clutch (2), is connected upstream of the first clutch (2) and the second clutch (3).

2. Dual clutch transmission according to Claim 1, **characterized in that** the sum of the first and second volumetric flows for cooling and lubricating the first and second clutches (2, 3) corresponds to the sum of the lubricating flow and the cooling flow.

3. Dual clutch transmission according to Claim 1 or 2, **characterized in that** a control valve (11) which controls the cooling flow is connected upstream of the switching valve (4).

4. Dual clutch transmission according to one of Claims 1 to 3, **characterized in that** the cooling flow can be varied in a range from 0 liter/min up to a maximum value.

5. Dual clutch transmission according to Claim 3 or 4, **characterized in that** the cooling flow is not zero in the absence of a signal which actuates the control valve (11).

6. Dual clutch transmission according to Claim 5, **characterized in that** the control valve (11) is designed as a 2/3-way valve having an inlet (12) and an outlet (13) or is designed as a 3/3-way valve having an inlet (12a), an inlet (12b) and an outlet (13), which in a first position shifts a diaphragm (19) between inlet (12, 12a) and outlet (13), in a second position disconnects inlet (12, 12a, 12b) and outlet (13), and in a third position connects inlet (12, 12b) and outlet (13), the control valve (11) adopting the first position when the value of the signal is equal to zero.

7. Dual clutch transmission according to one of Claims 3 to 6, **characterized in that** the control valve (11) can be switched between the various positions a number of times per second, preferably up to 20 times per second.

8. Dual clutch transmission according to one of Claims 1 to 7, **characterized in that** a diaphragm (15), which can be used to set the lubricating flow to a constant value, is connected upstream of the switching valve (4).

9. Dual clutch transmission according to one of Claims 1 to 8, **characterized in that** the switching valve (4) can be switched between the first and second positions a number of times per second, preferably up to 20 times per second.

10. Dual clutch transmission according to one of Claims 1 to 9, **characterized in that** the switching valve (4) can be actuated by a signal from at least one signaling element (31, 36) which is used to select a shifting actuator (A1, A2, A3, A4), to select a group of shifting actuators (A1, A2, A3, A4) from a plurality of shifting actuators (A1, A2, A3, A4) in the dual clutch transmission or to select a chamber of a shifting actuator (A1, A2, A3, A4).

11. Dual clutch transmission according to one of Claims 1 to 10, **characterized in that** the switching valve (4) can be actuated by a signal from at least one signaling element (31, 33), by means of which the first or second clutch (2, 3) can be switched to an unpressurized state.

12. Dual clutch transmission according to Claim 10 or 11, **characterized in that** the switching valve (4) can be actuated by signals from the signaling element for shifting actuator selection and from the signaling element for switching the clutches (2, 3) to an unpressurized state, the signal to switch the clutches to an unpressurized state being stronger than the signal from the signaling element for shifting actuator selection.

13. Dual clutch transmission according to one of Claims 1 to 12, **characterized in that** the switching valve (4) can be actuated by at least one hydraulic element which can be used to carry out the force control for the shifting actuators.

## Revendications

1. Boîte de vitesses à double embrayage comprenant un système hydraulique (1) pour fournir des pressions et des courants volumiques, notamment pour fournir un premier courant volumique pour refroidir et lubrifier un premier embrayage (2) et pour fournir un deuxième courant volumique pour refroidir et lubrifier un deuxième embrayage (3), **caractérisée en ce qu'**en amont du premier embrayage (2) et du deuxième embrayage (3) est disposée au moins une soupape d'inversion (4), qui, dans une première position, dirige un courant de lubrification vers le premier embrayage (2), et un courant de refroidissement vers le deuxième embrayage (3), et, dans une deuxième position, dirige le courant de lubrification vers le deuxième embrayage (3) et le courant de refroidissement vers le premier embrayage (2).

2. Boîte de vitesses à double embrayage selon la revendication 1, **caractérisée en ce que** la somme du premier et du deuxième courant volumique pour refroidir et lubrifier les premier et deuxième embrayages (2, 3) correspond à la somme du courant de lubrification et du courant de refroidissement.

3. Boîte de vitesses à double embrayage selon la revendication 1 ou 2, **caractérisée en ce qu'**en amont de la soupape d'inversion (4) est disposée une soupape de commande (11) qui régule le courant de refroidissement.

4. Boîte de vitesses à double embrayage selon l'une quelconque des revendications 1 à 3, **caractérisée en ce que** le courant de refroidissement peut varier dans une plage de 0 litre/min à une valeur maximale.

5. Boîte de vitesses à double embrayage selon la revendication 3 ou 4, **caractérisée en ce que** le courant de refroidissement est différent de zéro dans le cas où un signal commandant la soupape de commande (11) n'est pas appliqué.

6. Boîte de vitesses à double embrayage selon la revendication 5, **caractérisée en ce que** la soupape de commande (11) est réalisée sous forme de soupape à 2/3 voies avec une entrée (12) et une sortie (13), ou est réalisée sous forme de soupape à 3/3 voies avec une entrée (12a), une entrée (12b) et une sortie (13), qui, dans une première position, commute un diaphragme (19) entre l'entrée (12, 12a) et la sortie (13), dans une deuxième position, sépare l'entrée (12, 12a, 12b) et la sortie (13), et dans une troisième position, relie l'entrée (12, 12b) et la sortie (13), la soupape de commande (11) adoptant la première position lorsque la valeur du signal est nulle.

7. Boîte de vitesses à double embrayage selon l'une quelconque des revendications 3 à 6, **caractérisée en ce que** la soupape de commande (11) peut être commutée plusieurs fois par seconde, de préférence jusqu'à 20 fois par seconde entre les différentes positions.

8. Boîte de vitesses à double embrayage selon l'une quelconque des revendications 1 à 7, **caractérisée en ce qu'**en amont de la soupape d'inversion (4) est monté un diaphragme (15) qui permet d'ajuster le courant de lubrification à une valeur constante.

9. Boîte de vitesses à double embrayage selon l'une quelconque des revendications 1 à 8, **caractérisée en ce que** la soupape d'inversion (4) peut être commutée plusieurs fois par seconde, de préférence jusqu'à 20 fois par seconde entre une première et une deuxième position.

10. Boîte de vitesses à double embrayage selon l'une quelconque des revendications 1 à 9, **caractérisée en ce que** la soupape d'inversion (4) peut être commandée par un signal d'au moins un élément de signal (31, 36), qui est utilisé pour la sélection d'un actionneur de commutation (A1, A2, A3, A4), pour la sélection d'un groupe d'actionneurs de commutation (A1, A2, A3, A4) parmi une pluralité d'actionneurs de commutation (A1, A2, A3, A4) dans la boîte de vitesses à double embrayage, ou pour la sélection d'une chambre d'un actionneur de commutation (A1, A2, A3, A4).

11. Boîte de vitesses à double embrayage selon l'une quelconque des revendications 1 à 10, **caractérisée en ce que** la soupape d'inversion (4) peut être commandée par un signal d'au moins un élément de signal (31, 33), qui permet de commuter sans pression le premier ou le deuxième embrayage (2, 3) .

12. Boîte de vitesses à double embrayage selon la revendication 10 ou 11, **caractérisée en ce que** la soupape d'inversion (4) peut être commandée par des signaux de l'élément de signal pour la sélection de l'actionneur de commutation et de l'élément de signal pour la commutation sans pression des embrayages (2, 3), le signal pour la commutation sans pression des embrayages étant plus fort que le signal de l'élément de signal pour la sélection de l'actionneur de commutation.

13. Boîte de vitesses à double embrayage selon l'une quelconque des revendications 1 à 12, **caractérisée en ce que** la soupape d'inversion (4) peut être commandée par au moins un élément hydraulique, qui permet d'effectuer la régulation de force pour les actionneurs de commutation.
